# EUROPEAN PATENT APPLICATION

(11) **EP 2 857 676 A1**
(43) Date of publication of application: **08.04.2015**
(21) Application number: 13797929.0
(22) Date of filing: 30.05.2013
(51) Int. Cl.: F03D 3/00, F03D 3/06

(54) **VERTICAL-AXIS WIND TURBINE**

(30) Priority: 31.05.2012 ES 201230834
(71) Applicant: Dobgir, S.L., 07760 Ciutadella De Menorca (Baleares) (ES)
(72) Inventor: JUAN ANDREU, Jose Manuel, E-07760 Ciutadella de Menorca (Baleares) (ES)
(74) Representative: Durán-Corretjer, S.L.P.
(86) International application number: PCT/ES2013/070348
(87) International publication number: WO 2013/178859

(57) **Abstract**

The invention relates to a vertical-axis wind turbine of the type comprising a set of blades around a central shaft and an electrical generator, as well as a rotor coupled to both the blades and the electrical generator. The rotor includes a central cavity intended to receive a column.

## Description

This invention relates to a vertical axis wind turbine. More particularly this invention relates to vertical axis wind turbines which can be coupled to existing structures.

Vertical axis wind turbines (or VAWT, the English acronym for Vertical Axis Wind Turbine) have an essential technical characteristic which clearly distinguishes them from horizontal axis wind turbines (or HAWT, the English acronym for Horizontal Axis Wind Turbine), the difference being that in the former the blades rotate with respect to a vertical axis. This structural difference in turn gives rise to functional improvements, specifically:
- They do not require installations at a great altitude, as a result of which they do not disturb the aesthetics of an area or landscape, avoiding producing a considerable environmental impact.
- Furthermore, this arrangement at a lower altitude assists maintenance and/or the repair of damage.
- The dynamic of the blades is much more simple than in the case of HAWT, resulting in that the devices have a simpler and more lightweight structure.
- Impact on birds and other animals is avoided.
- Rotation speed is slower, thus reducing wear on components and/or noise generated.
- There is no need to orientate the wind turbine in a specific direction depending upon the prevailing wind.

Vertical axis wind turbines comprising a rotor and blades separated from that rotor by a specific radial distance are widely known, for example patent document WO2011/033348 discloses a vertical axis wind turbine with helical blades comprising a central axis along which is located a column serving as a shaft to drive an electrical energy generator. This embodiment of a vertical axis wind turbine has the disadvantage that it has to be fitted to the top of a structure and there are no means for coupling it to an existing structure.

If it is intended that increased visual pollution of a particular landscape should be avoided, wind turbines of this type are highly inconvenient in that they comprise a new structure generating a considerable visual impact, although that impact is less than in the case of HAWT (on account of the smaller size required for the structure).

In order to overcome these disadvantages this invention discloses a device which can be coupled to existing structures and which can be located at an intermediate point on a structure in such a way that it generates a much smaller visual impact and as a consequence generates energy from an environmentally-friendly device which for example avoids the visual and/or auditory pollution produced by previously known devices.

Specifically this invention relates to a vertical axis wind turbine of the type comprising:
- a set of blades around a central axis;
- an electrical energy generator
comprising a rotor which in turn has a central axis and is connected to both the blades and the aforesaid electrical energy generator and the said rotor has a central cavity which is intended to be occupied by a column.

In a particular embodiment of this invention the central axis of the wind turbine passes through the central cavity of the rotor.

In particular the rotor of the wind turbine constituting the subject matter of this invention is subdivided into at least two pieces defined by the intersection between the rotor and at least one plane substantially parallel to the central axis of the wind turbine; that is the rotor comprises two parts which can be dismantled in such a way that they can be attached to an existing structure at an intermediate point along it.

In addition to this, in order to hold the various parts of the rotor together, the rotor may comprise means for connecting the parts together, which may for example include a hinge or other means of connection.

Given that the central cavity of the rotor is intended to receive a structure (for example a column) so that it can be fitted to existing structures, the generator must be spatially located separately from the central cavity of the rotor. With this object, in one embodiment of this invention the generator is coupled to the rotor in the peripheral zone of the rotor by means of, for example, a gearbox. In this way the electrical energy generator is arranged in such a way that its central shaft does not pass through the central cavity of the rotor.

In another embodiment the generator comprises linear coils which are arranged in the rotor thus avoiding connections through gears, as the generator is incorporated in the rotor.

More particularly this invention may be implemented using different arrangements and numbers of blades. Preferably the set of blades comprises at least two blades and an angular separation of at least 60° between the blades may be selected.

In particular embodiments of this invention the blades are helical and the column to which the wind turbine is attached forms part of a structure of another device external to the wind turbine, for example a street lamp or column.

Preferably the wind turbine has clamps for attachment to a pole.

More preferably the clamps comprise two elements having an edge or face of polygonal shape to press against the pole on which it is desired that the wind turbine be installed.

Preferably the rotor has a fixed inner part and an outer moving part, the outer face of the fixed part or the inner face of the moving part having a raceway for wheels to allow relative movement between the fixed part and the moving part.

Even more preferably the wind turbine has a lubricating device by means of a lubricating felt located tangentially or secantly with respect to the wheels.

For a better understanding, drawings of an embodiment of the vertical axis wind turbine which is the object of this invention are provided by way of an explanatory but non-limiting example.
Figure 1 illustrates an embodiment of a wind turbine according to this invention.
Figure 2 illustrates a detail of the rotor of the wind turbine in Figure 1.
Figure 3 illustrates a perspective view of Figure 2 from below.
Figure 4 illustrates a view of the rotor from below.
Figure 5 illustrates a detail of the rotor/generator coupling.
Figure 6 illustrates a side view of the rotor/generator coupling in partial cross-section.
Figure 7 illustrates a view of this embodiment of the wind turbine from above.
Figure 8 illustrates an exploded view of this embodiment of the wind turbine.
Figure 9 illustrates the mechanism for connection between the two sections of the rotor in diagrammatical form.
Figure 10 illustrates an exploded view of another embodiment of the object of this invention.
Figure 11 illustrates a perspective view of the securing clamp in the embodiment in Figure 10.
Figure 12 illustrates a perspective view of a raceway arrangement in the embodiment illustrated in Figure 10.
Figure 13 illustrates a plan view of the raceway arrangement from above.
Figure 14 illustrates a perspective view of an alternative raceway arrangement in which the wheels are located in the outside.
Figure 15 illustrates a plan view of the raceway arrangement in Figure 14 from above.

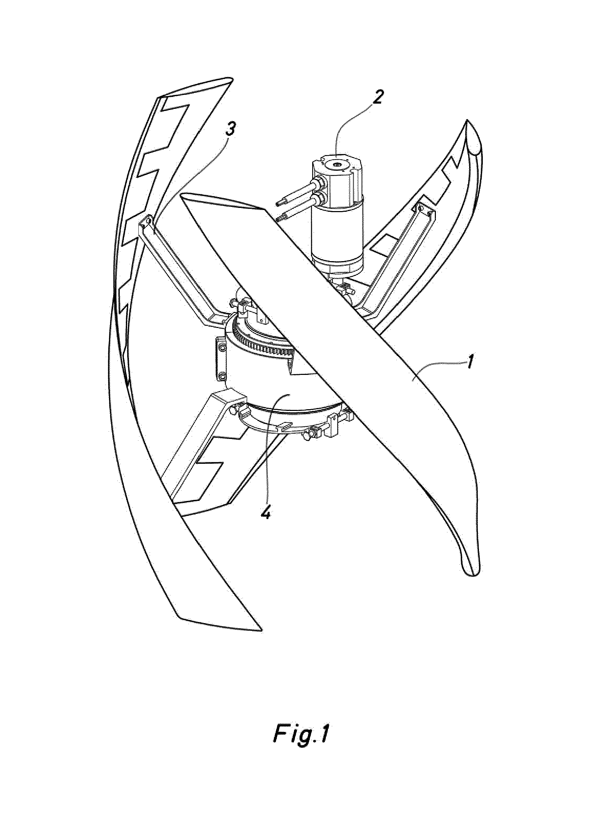

Figure 1 illustrates a vertical axis wind turbine comprising helical blades -1- connected together by means of arms -3- to a rotor -4-, rotor -4- being coupled to an electrical energy generator -2-.

In this embodiment of the wind turbine, wind from any direction causes blades -1- to rotate. As the blades are attached to rotor -4- they cause part of the latter to rotate. Generator -2- is arranged to convert the rotational energy generated by blades -1- into electrical energy.

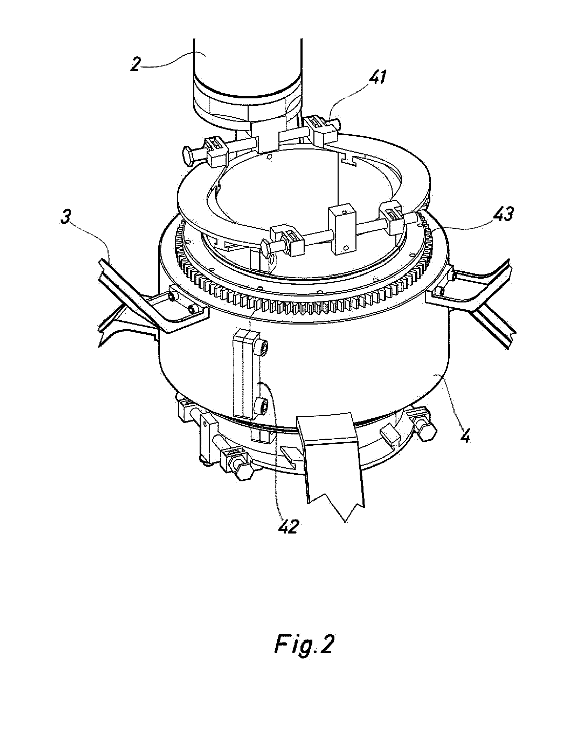

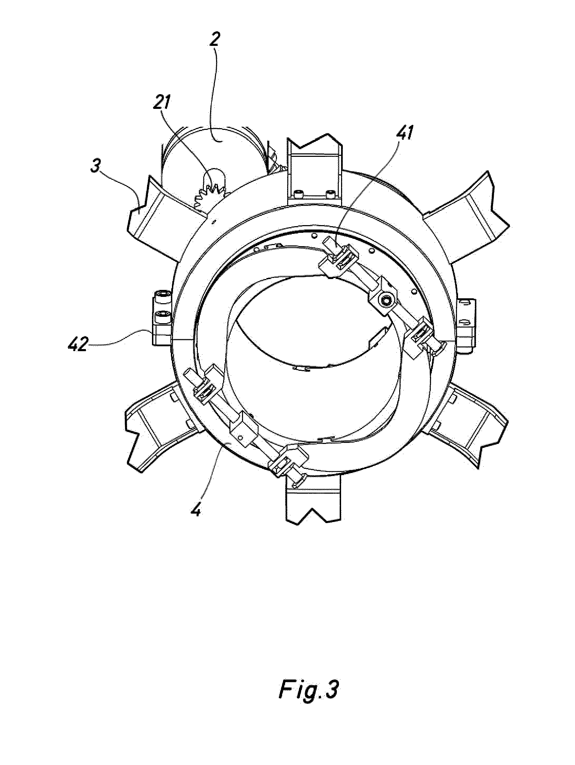

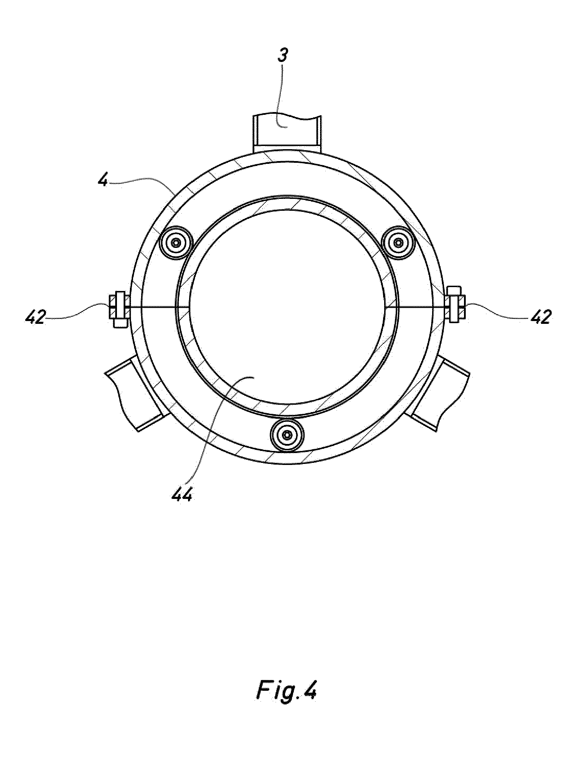

Figures 2, 3, 4 illustrate the rotor in an embodiment according to this invention in greater detail. In these figures it will be seen how rotor -4- has a central cavity -44- which is intended to be located around an existing column to which it can be coupled regardless of its geometry. With this aim the rotor comprises means for coupling to the column and the rotor is subdivided into two pieces which are in turn joined together by connecting means -42-. Thus the rotor can be divided into two independent sections and then be joined up around the column on which it is intended to be secured.

Also rotor -4- has a set of gears -43- which transmit the rotation received from the blades through arms -3- to the shaft of generator -2-, this shaft corresponding to the central axis of the generator in particular embodiments.

The arrangement of generator -2- in which its central axis does not coincide with the central cavity of the rotor, because this would impede fitting of the wind turbine at an intermediate point in an existing structure, in that the generator would occupy the space intended for the structure, is especially significant.

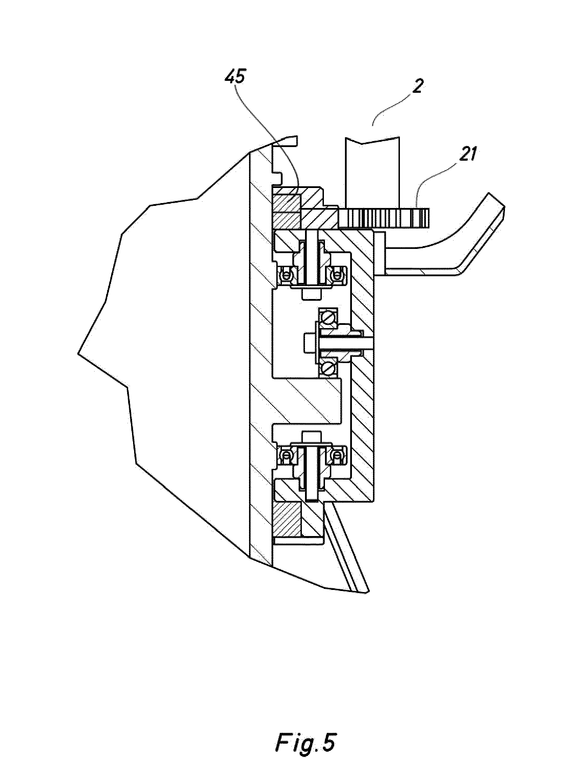

Figure 5 illustrates a view in which the coupling between rotor -4- and electrical energy generator -2- is detailed. In particular it will be seen how the shaft of the generator is coupled to the rotor by means of a gear -21- located on the shaft and a gearbox -45- associated with the rotor. This gearbox may be a gearbox which gears up or down according to the requirements of each particular application.

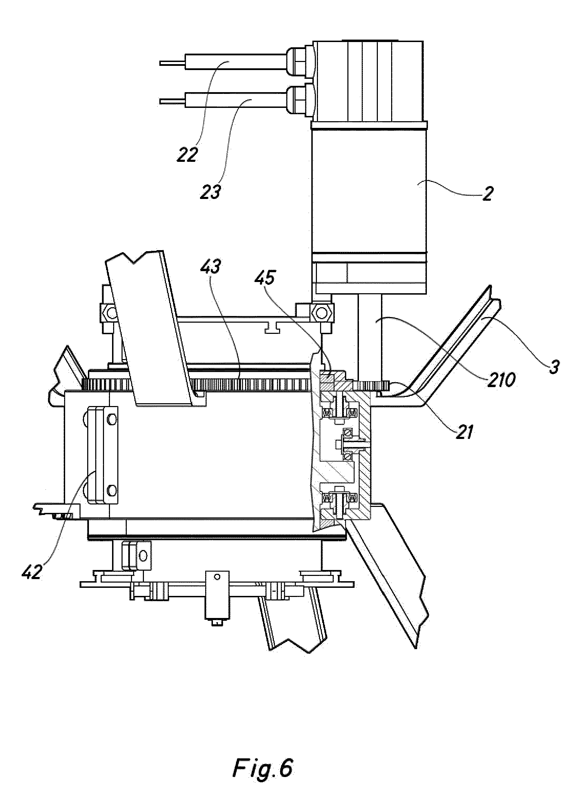

Figure 6 provides a side view in partial cross-section which places emphasis on the details of Figure 5 and the rotor/generator coupling.

In addition to the components previously described, central shaft -210- of the electrical energy generator together with its conductors -22-, -23- carrying the electrical energy generated will be seen in this view.

In addition to this, connection means -42- between the sections of the rotor, which may comprise a hinged connection, as shown in the following, can be seen in this figure.

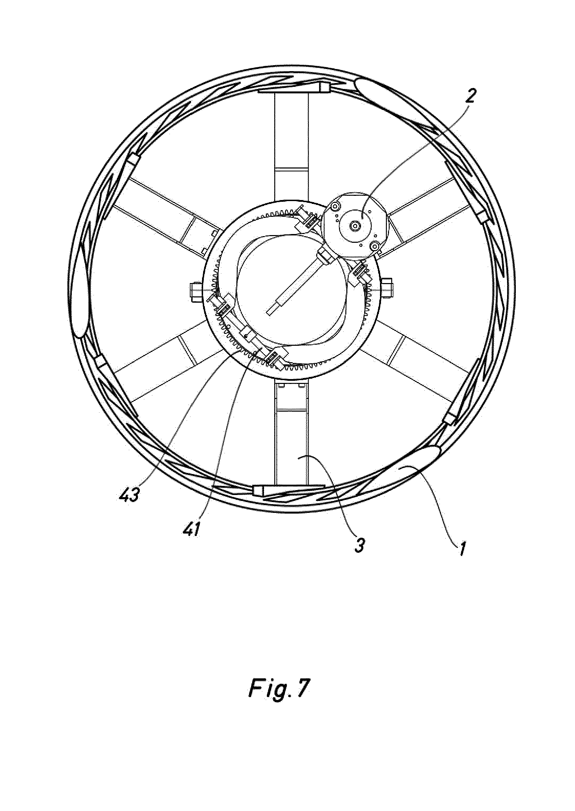

Figure 7 is a view from above in which it will be seen that means -41- for attachment to the structure can be attached to various geometries of the structures and holds the device in a fixed position with respect to those structures.

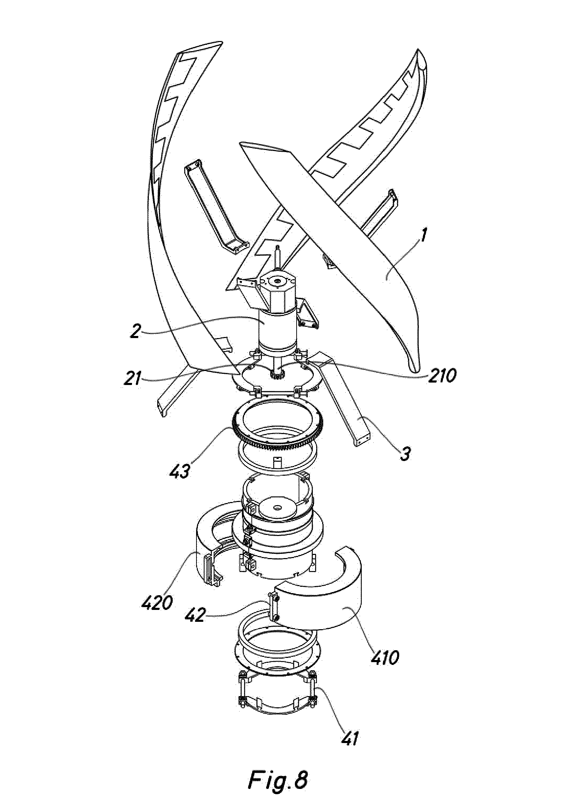

Figure 8 is an exploded view of the components in a preferred embodiment of this invention. This figure demonstrates the possibility of having a rotor subdivided into two parts -410-, -420-.

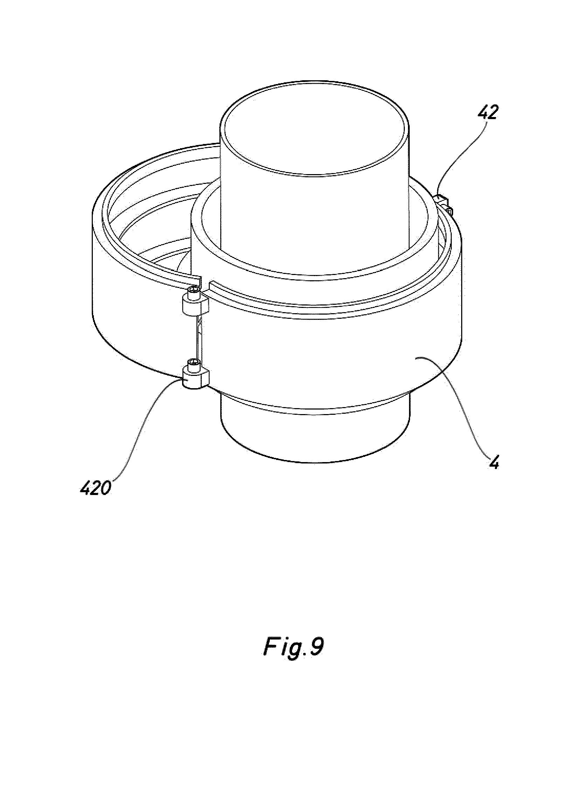

Figure 9 makes reference to the fact that, in addition to being capable of being subdivided, the wind turbine according to this invention may have connection means -42- between sections having a hinge -421- to aid installation. Given that this view is a mere diagrammatical illustration, additional parts such as gears, means of attachment to the column, etc., have not been included.

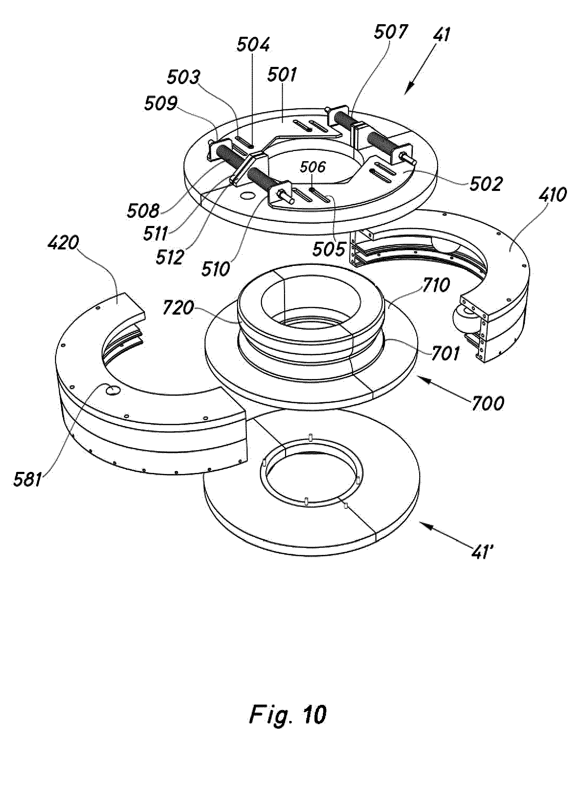

Figures 10 to 13 illustrate an alternative embodiment of rotor -4-. Elements which are the same or equivalent to those in the previous embodiments have been identified using the same numbers. In a way similar to the previous embodiments rotor -4- has a central cavity which is intended to be located around a column. Likewise the rotor can be separated into two independent parts. In this embodiment, for reasons of clarity the gears transmitting the rotation received from the blades through the arms (also not shown) to the shaft of the generator have not been shown for reasons of clarity.

The embodiment illustrated has two clamps -41-, -41'-, one above and the other below.

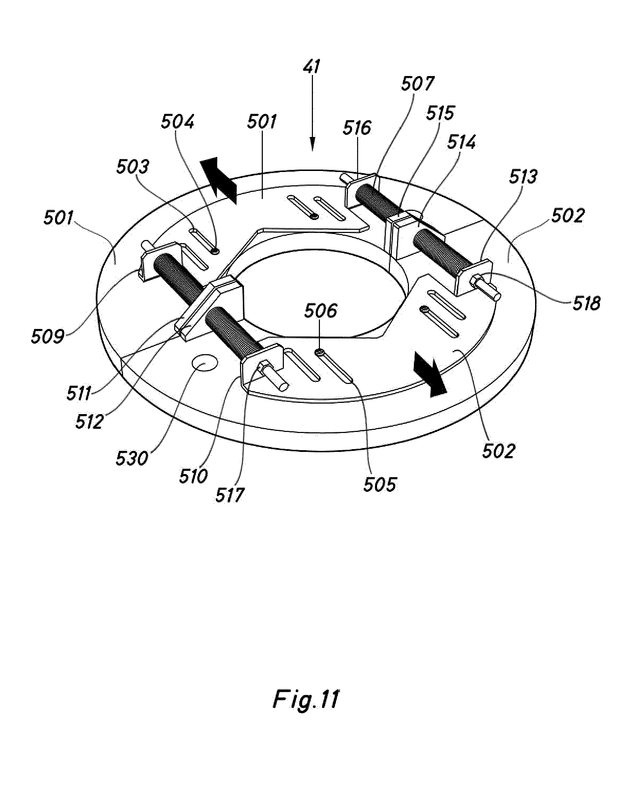

Figure 11 illustrates one of the two clamps.

Each clamp is formed of two symmetrical and fixed parts and two moving elements -501-, -502- which have a polygonal edge (in this case each element has two sides forming an acute angle between them) for better support on poles of different diameters or slightly irregular shape. Each element -501-, -502- has two vertical projections -509-, -510- for connection to threaded pins -507-, -508-, -513-, -516- which can vary the distance between elements -501-, -502- through adjustment of corresponding nuts -517-, -518-. Through this system the pieces of sheet metal forming elements -501-, -502- are moved to fit the clamp to any type of support. Threaded pins -507-, -508-are also attached to the non-moving part of clamp -41-through corresponding projections -511-, -512-, -514-, -513-. Thus elements -501-, -502- of the clamp have plots -505-, -503- for securing movable elements -501-, -502- to the fixed part of clamp -41- through corresponding screws -504-, -506-, once the elements have been tightened against the pole.

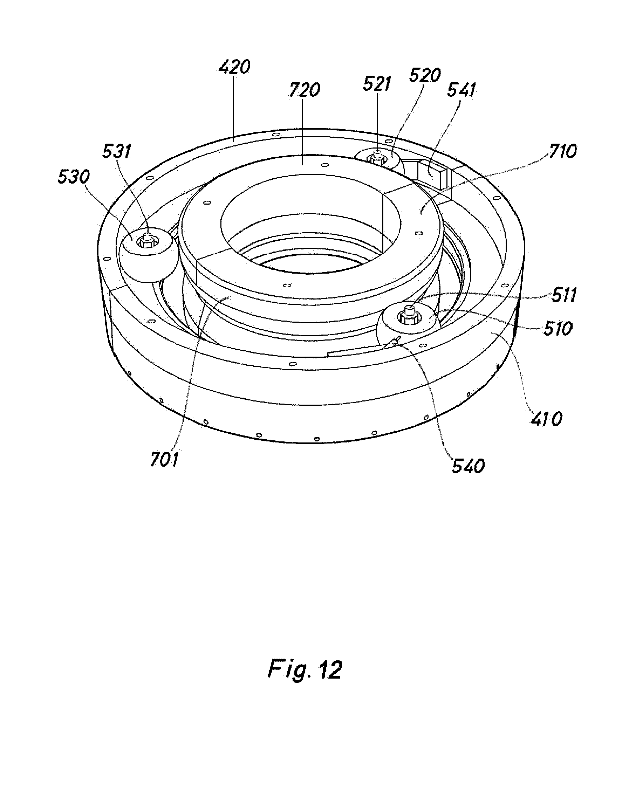

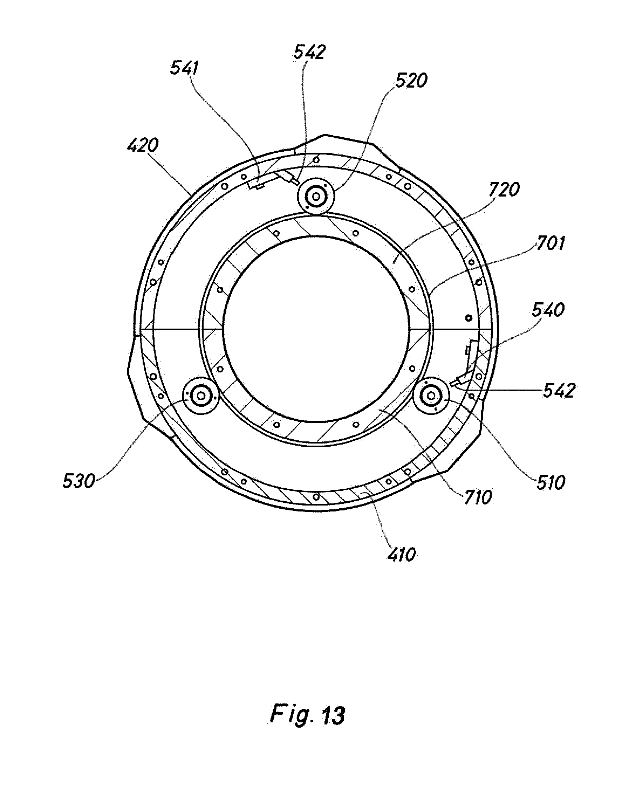

Figures 12 and 13 illustrate an embodiment of the main body of the rotor in which central part -710-, -720-is fixed and the outer part is moving. Fixed central core -700-, comprising two pieces -710-, -720-, has outside it a raceway -701- forming a race in which wheels -510-, -520-, 530- attached to outer part -410-, -420- of the core through a shaft -511-, -521-, -531- rotate. Preferably one of the three wheels -510-, -520-, -530- can be adjusted eccentrically, while the other two may be fixed. A small number of wheels (three, as in the example) reduces friction and maintenance, and in turn ensures contact between the wheels and the raceway. In this case the raceway is fixed and does not rotate, although the opposite would also be possible. This system offers less friction, simple assembly, low maintenance and low manufacturing costs. The wheels are adjustable and are floating, as a result of which the system can be compensated. The outer part further has three secant pieces -540-, -541- supporting felts -542- impregnated with lubricating oil, the exterior of which rub against wheels -510-, -520-, -530- providing lubrication to the wheels so that they move better on raceway surface -701-. The presence of the lubrication system, especially that proposed, improves durability and avoids the appearance of surface defects on the contact surface.

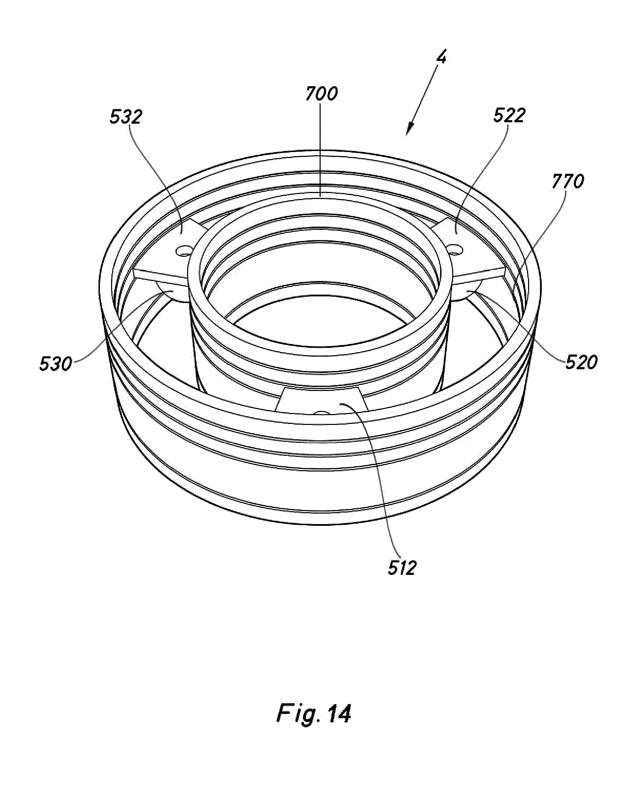

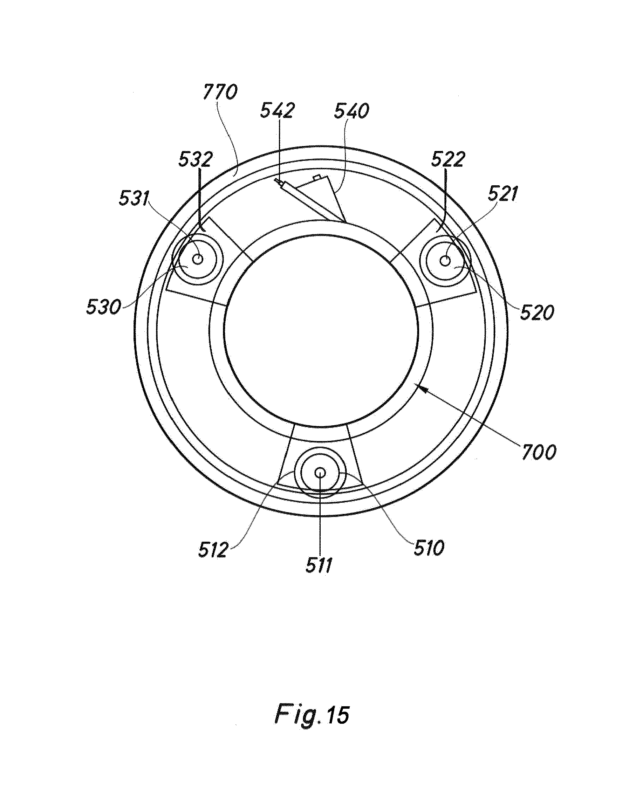

Figures 14 and 15 illustrate an alternative embodiment of the main body of the rotor in which the same numbers as those in the previous example represent identical or similar elements, as a result of which they will not be described in detail.

As a difference from the previous embodiment, in this one wheels -510-, -520-, -530- are secured to fixed core -700- via their shafts -511-, -521-, -531- which are attached to radial pieces -512-, -522-, -532-. The raceway area -770- for the wheels is located on the outer moving part and lubrication device -540- with a secant-arranged lubricating felt is located fixed to central part -700-.

It should be borne in mind that in the examples illustrated the clamp is independent of the raceway or the running system. This avoids the transmission of forces, which could give rise to defects in the raceway, with consequent losses and/or damage.

The materials used to manufacture the components of a device according to this invention, their shapes and dimensions, the number of sections into which the rotor is divided and all accessory details arising are independent of the subject matter of the invention and in no way affect its essential nature.

Although the invention has been described in relation to preferred embodiments, these must not be regarded as limiting the invention, which will be defined by the broadest interpretation of the following claims.

## Claims

1. A vertical axis wind turbine of the type comprising:
- a set of blades around a central axis; and
- an electrical energy generator;
**characterised in that** it comprises a rotor which is coupled to both the blades and the aforesaid electrical energy generator and **in that** the rotor has a central cavity intended to be occupied by a column.

2. A wind turbine according to claim 1, **characterised in that** the central axis of the wind turbine passes through the central cavity of the rotor.

3. A wind turbine according to either of claims 1 or 2, **characterised in that** it is subdivided into at least two parts defined by the intersection of the rotor with at least one plane substantially parallel to the central axis of the wind turbine.

4. A wind turbine according to claim 3, **characterised in that** the rotor further comprises means for connection between the parts.

5. A wind turbine according to claim 4, **characterised in that** the means of connection between the parts comprise a hinge.

6. A wind turbine according to any one of the preceding claims, **characterised in that** the generator is coupled to the rotor in the peripheral zone of the rotor.

7. A wind turbine according to any one of the preceding claims, **characterised in that** the coupling between the rotor and the generator is provided by means of a gearbox.

8. A wind turbine according to any one of the preceding claims, **characterised in that** the electrical energy generator is located in such a way that its central axis does not pass through the central cavity of the rotor.

9. A wind turbine according to any one of claims 1 to 5, **characterised in that** the generator comprises linear coils located in the rotor.

10. A wind turbine according to any one of the preceding claims, **characterised in that** the blade assembly comprises at least two blades.

11. A wind turbine according to any of the preceding claims, **characterised in that** the blades in the set of blades are separated by an angular distance of at least 60°.

12. A wind turbine according to any one of the preceding claims, **characterised in that** the blades are helical.

13. A wind turbine according to any one of the preceding claims, **characterised in that** the column forms part of the structure of another device external to the wind turbine.

14. A wind turbine according to claim 13, **characterised in that** the structure forms part of a streetlamp or column.

15. A wind turbine according to any one of claims 1 to 14, **characterised in that** it has clamps for attachment to a pole.

16. A wind turbine according to claim 15, **characterised in that** the clamps comprise two elements having an edge or face of polygonal shape to press against the pole on which it is desired that the wind turbine should be installed.

17. A wind turbine according to any one of claims 1 to 16, **characterised in that** the rotor has a fixed inner part and a moving outer part, the outer face of the fixed part or the inner face of the moving part having a raceway for wheels to allow relative movement between the fixed part and the moving part.

18. A wind turbine according to claim 17, **characterised in that** it comprises a lubrication device in the form of a lubricating felt located tangentially or secantly with respect to the wheels.
